# EUROPEAN PATENT APPLICATION

(11) **EP 4 621 100 A2**
(43) Date of publication of application: **24.09.2025**
(21) Application number: 25161779.1
(22) Date of filing: 05.03.2025
(51) Int. Cl.: C25B 1/04, C25B 1/23, C25B 3/03, C25B 3/07, C25B 3/26, C25B 9/19, C25B 9/23, C25B 9/77, C25B 15/021, C25B 15/025, C25B 15/031, C25B 15/08, C25B 15/029

(54) **ELECTROCHEMICAL REACTION DEVICE AND METHOD OF OPERATING ELECTROCHEMICAL REACTION DEVICE**

(30) Priority: 19.03.2024 JP 2024043209
(71) Applicant: Kabushiki Kaisha Toshiba, Tokyo 105-0023 (JP)
(72) Inventor: MIKOSHIBA, Satoshi, Minato-ku, Tokyo, 105-0023 (JP); KITAGAWA, Ryota, Minato-ku, Tokyo, 105-0023 (JP); KOFUJI, Yusuke, Minato-ku, Tokyo, 105-0023 (JP); FUJIWARA, Naoya, Minato-ku, Tokyo, 105-0023 (JP); ONO, Akihiko, Minato-ku, Tokyo, 105-0023 (JP); YONETSU, Maki, Minato-ku, Tokyo, 105-0023 (JP)
(74) Representative: Hoffmann Eitle

(57) **Abstract**

An electrochemical reaction device includes: an electrochemical reaction structure including a cathode to reduce carbon dioxide to produce a carbon compound, an anode to oxidize water to produce oxygen, a diaphragm therebetween, a cathode flow path on the cathode, and an anode flow path on the anode; a first flow path through which a first fluid to the cathode flow path flows; a second flow path through which a second fluid to the anode flow path flows; a third flow path through which a third fluid from the cathode flow path flows; a fourth flow path through which a fourth fluid from the anode flow path flows; and a gas-liquid separator in or on the anode flow path and to separate a gas containing the oxygen from a fifth fluid containing the water and the oxygen through the anode flow path.

## Description

### FIELD

Arrangements relate to an electrochemical reaction device.

### BACKGROUND

The recent concern over the depletion of fossil fuels such as petroleum and coal has given rise to increasing expectations for sustainably available renewable energy. In light of such energy problems, and further environmental problems and the like, efforts are being made to advance the development of P2C (Power to Chemicals) technology which electrochemically reduces carbon dioxide to generate a storable chemical energy source, using renewable energy such as sunlight. An electrochemical reaction device such as a carbon dioxide reaction device including an electrolysis device, that implements the P2C technology includes an anode that oxidizes, for example, water (H₂O) to produce oxygen (O₂) and a cathode that reduces carbon dioxide (CO₂) to produce a carbon compound. The anode and the cathode of the carbon dioxide reaction device are connected to a power source derived from renewable energy such as solar power, hydropower, wind power, or geothermal power.

The cathode of the carbon dioxide reaction device is arranged, for example, to be immersed in water containing dissolved carbon dioxide or to be on carbon dioxide that flows through a flow path. The cathode obtains a carbon dioxide reduction potential from the renewable energy-derived power source, thereby reducing carbon dioxide to produce a carbon compound such as carbon monoxide (CO), formic acid (HCOOH), methanol (CH₃OH), methane (CH₄), ethanol (C₂H₅OH), ethane (C₂H₆), ethylene (C₂H₄), formaldehyde (HCHO), ethylene glycol (C₂H₆O₂), acetic acid (CH₃COOH), or propanol (C₃H₇OH). The anode is arranged to be on an electrolytic solution containing water and produces oxygen and hydrogen ions (H⁺). In such a carbon dioxide reaction device, it is required to prevent the deterioration of its members to achieve a longer-term stable operation.

### RELEVANT REFERENCES

### Patent Reference

Reference 1: JPA 2022-049861

### BRIEF DESCRIPTION OF THE DRAWINGS

FIG. 1 is a schematic view illustrating an example configuration of an electrochemical reaction device of a first arrangement.
FIG. 2 is a schematic view illustrating an example configuration of an electrochemical reaction device of a second arrangement.
FIG. 3 is a schematic view illustrating an example configuration of an electrochemical reaction device of a third arrangement.
FIG. 4 is a schematic view illustrating an example configuration of an electrochemical reaction device of a fourth arrangement.
FIG. 5 is a schematic view illustrating an example configuration of an electrochemical reaction device of a fifth arrangement.
FIG. 6 is a schematic view illustrating an example configuration of an electrochemical reaction device of a sixth arrangement.
FIG. 7 is a schematic view illustrating an example configuration of an electrochemical reaction device of a seventh arrangement.
FIG. 8 is a schematic view illustrating an example configuration of an electrochemical reaction device of an eighth arrangement.
FIG. 9 is a schematic view illustrating an example configuration of an electrochemical reaction device of a ninth arrangement.
FIG. 10 is a schematic view illustrating an example configuration of an electrochemical reaction device of a tenth arrangement.
FIG. 11 is a schematic view illustrating an example configuration of an electrochemical reaction device of an eleventh arrangement.
FIG. 12 is a schematic view illustrating an example configuration of an electrochemical reaction device of a twelfth arrangement.
FIG. 13 is a schematic view illustrating an example configuration of an electrochemical reaction device of a thirteenth arrangement.
FIG. 14 is a schematic view illustrating an example configuration of an electrochemical reaction device of a fourteenth arrangement.
FIG. 15 is a schematic view illustrating the example configuration of the electrochemical reaction device of the fourteenth arrangement.
FIG. 16 is a schematic view illustrating an example configuration of an electrochemical reaction device of Comparative Example 1.
FIG. 17 is a schematic view illustrating the example configuration of the electrochemical reaction device of Comparative Example 1.
FIG. 18 is a schematic view illustrating an example configuration of an electrochemical reaction device of Comparative Example 2.

### DETAILED DESCRIPTION

An electrochemical reaction device of an arrangement includes: an electrochemical reaction structure including a cathode having a reduction catalyst that promotes a reduction reaction of reducing carbon dioxide to produce a carbon compound, an anode having an oxidation catalyst that promotes an oxidation reaction of oxidizing water to produce oxygen, a diaphragm provided between the cathode and the anode, a cathode flow path facing on the cathode, and an anode flow path facing on the anode; a first flow path through which a first fluid to be supplied to the cathode flow path flows, the first flow path being connected to an inlet of the cathode flow path, and the first fluid containing the carbon dioxide; a second flow path through which a second fluid to be supplied to the anode flow path flows, the second flow path being connected to an inlet of the anode flow path, and the second fluid containing the water; a third flow path through which a third fluid to be discharged from the cathode flow path flows, the third flow path being connected to an outlet of the cathode flow path, and the third fluid containing the carbon compound; a fourth flow path through which a fourth fluid to be discharged from the anode flow path flows, the fourth flow path being connected to an outlet of the anode flow path, and the fourth fluid containing the water and the oxygen; and a gas-liquid separator provided in the middle of the anode flow path or on the anode flow path, the gas-liquid separator being configured to process a fifth fluid that flows through the anode flow path and contains the water and the oxygen to separate a gas containing the oxygen from the fifth fluid.

Arrangements will be hereinafter described with reference to the drawings. In the following arrangements, substantially the same constituent parts are denoted by the same reference signs, and a description thereof may be partly omitted. The drawings are schematic, and a relation between thickness and planar dimensions, a thickness ratio among parts, and so on may be different from actual ones.

In this specification, "connection" includes not only direct connection but also indirect connection unless otherwise designated.

### (First Arrangement)

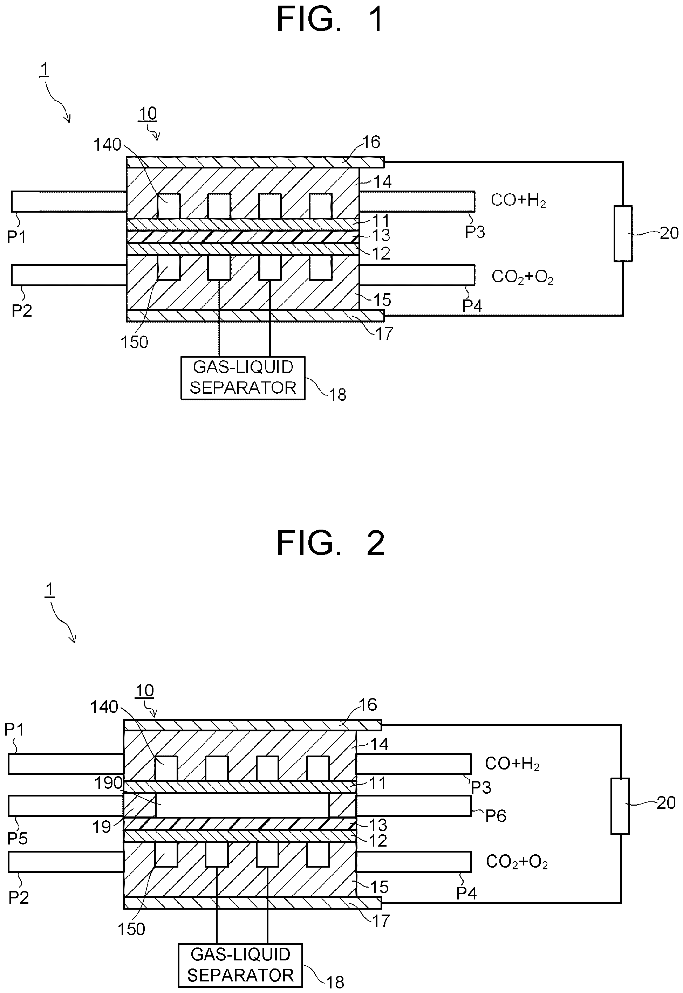

FIG. 1 is a schematic view illustrating an example configuration of an electrochemical reaction device of a first arrangement. FIG. 1 illustrates an example sectional structure of the electrochemical reaction device 1. The electrochemical reaction device 1 has an electrochemical reaction structure 10, a flow path P1, a flow path P2, a flow path P3, and a flow path P4.

The electrochemical reaction structure 10 has a cathode 11, an anode 12, a diaphragm 13, a flow path plate 14, a flow path plate 15, a current collector 16, a current collector 17, and a gas-liquid separator 18.

The cathode 11 is a reduction electrode for causing a reduction reaction of at least one reducible material (substance to be reduced), for instance. Examples of at least one reducible material include carbon dioxide. The cathode 11 reduces, for example, carbon dioxide supplied as a gas or carbon dioxide contained in a cathode electrolytic solution (cathode solution) to produce a carbon compound. Examples of the carbon compound include carbon monoxide, formic acid, methanol, methane, ethanol, ethane, ethylene, formaldehyde, ethylene glycol, acetic acid, and propanol. In the cathode 11, a side reaction to produce hydrogen through a reduction reaction of water sometimes occurs in addition to the carbon dioxide reduction reaction.

The cathode 11 has a reduction catalyst that promotes the reduction reaction that reduces carbon dioxide and produces the carbon compound, for instance. The reduction catalyst can be formed using a material that decreases activation energy for reducing the reducible material, for instance. In other words, the reduction catalyst can be formed using a material that decreases an overpotential in the production of the carbon compound through the reduction reaction of the carbon dioxide, for instance.

The cathode 11 can be formed using a metal material or a carbon material, for instance. Examples of the metal material include metals such as gold, aluminum, copper, silver, platinum, palladium, zinc, mercury, indium, nickel, and titanium, and alloys containing any of these metals. Examples of the carbon material include graphene, CNT (Carbon Nanotube), fullerene, and ketjen black. The material is not limited to these, and the cathode 11 may be formed using a metal complex such as a Ru complex or a Re complex, or an organic molecule having an imidazole skeleton or a pyridine skeleton. The cathode 11 may be formed using a mixture of a plurality of materials. The cathode 11 may have a structure in which the reduction catalyst in a thin film form, a lattice form, a granular form, a wire form, or the like is provided on a conductive base material, for instance. The kind of the carbon compound produced through the reduction reaction differs depending on the kind of the reduction catalyst.

The anode 12 is an oxidation electrode for causing an oxidation reaction of at least one oxidizable material (substance to be oxidized), for instance. Examples of at least one oxidizable material include water. The anode 12 oxidizes the oxidizable material such as a substance or ions in an electrolytic solution (anode solution) to produce oxygen, for instance.

The anode 12 has an oxidation catalyst that promotes the oxidation reaction that oxidizes water and produces oxygen, for instance. The oxidation catalyst can be formed using a material that decreases activation energy in the oxidation of the oxidizable material, in other words, a material that decreases a reaction overpotential, for instance. Examples of the oxidation reaction in the anode 12 include a reaction to oxidize water and produce oxygen or a hydrogen peroxide solution, a reaction to oxidize chloride ions (Cl⁻) and produce chlorine, and a reaction to oxidize carbonate ions or hydrogen carbonate ions and produce carbon dioxide.

Examples of the oxidation catalyst include a metal material. Examples of the metal material include ruthenium, iridium, platinum, cobalt, nickel, iron, manganese, tantalum, and zirconium. Examples of the metal material further include binary metal oxide, ternary metal oxide, and quaternary metal oxide. Examples of the binary metal oxide include manganese oxide (Mn-O), iridium oxide (Ir-O), nickel oxide (Ni-O), cobalt oxide (Co-O), iron oxide (Fe-O), tin oxide (Sn-O), indium oxide (In-O), and ruthenium oxide (Ru-O). Examples of the ternary metal oxide include nickel-iron oxide (Ni-Fe-O), nickel-cobalt oxide (Ni-Co-O), lanthanum-cobalt oxide (La-Co-O), nickel-lanthanum oxide (Ni-La-O), and strontium-iron oxide (Sr-Fe-O). Examples of the quaternary metal oxide include lead-ruthenium-iridium oxide (Pb-Ru-Ir-O) and lanthanum-strontium-cobalt oxide (La-Sr-Co-O). The material is not limited to these and the oxidation catalyst may be formed using metal hydroxide containing metal such as cobalt, nickel, iron, or manganese or a metal complex such as a ruthenium complex or an iron complex. Further, the oxidation catalyst may be formed using a mixture of a plurality of materials.

The anode 12 may be formed using a composite material containing both the oxidation catalyst and a conductive material. Examples of the conductive material include carbon materials such as carbon black, activated carbon, fullerene, carbon nanotube, graphene, ketjen black, and diamond, transparent conductive oxides such as indium tin oxide (ITO), zinc oxide (ZnO), fluorine-doped tin oxide (FTO), aluminum-doped zinc oxide (AZO), and antimony-doped tin oxide (ATO), metals such as copper, aluminum, titanium, nickel, silver, tungsten, cobalt, and gold, and an alloy containing at least one of these metals. For example, the anode 12 may have a structure in which the oxidation catalyst in a thin film form, a lattice form, a granular form, a wire form, or the like is provided on a conductive base material. The conductive base material can be formed using a metal material containing titanium, a titanium alloy, or stainless steel, for instance.

The diaphragm 13 is provided between the cathode 11 and the anode 12. The diaphragm 13 can serve as a partition between a cathode chamber 140 and an anode chamber 150. The diaphragm 13 allows ions such as hydrogen ions (H⁺), hydroxide ions (OH⁻), hydrogen carbonate ions (HCO₃⁻), and carbonate ions (CO₃²⁻) to move through. With the diaphragm 13, an electrochemical reaction cell (electrolysis cell) having a two-chamber structure can be formed. The diaphragm 13 may be provided on the cathode 11 and the anode 12.

The diaphragm 13 can be formed using, for example, a membrane selectively allowing anions or cations that flows through. Consequently, it is possible to make the composition of the electrolytic solution on the anode 12 different from the composition of the electrolytic solution on the cathode 11, and according to their difference such as ion intensity difference or pH difference, it is possible to promote the reduction reaction or the oxidation reaction. The diaphragm 13 may have a function of allowing the permeation of part of ions contained in the electrolytic solutions in which the cathode 11 and the anode 12 are immersed, that is, a function of blocking one kind or more of ions contained in the electrolytic solutions. This makes it possible to make the two electrolytic solutions different in pH or the like, for instance. Further, as for the blocking of the ions, the diaphragm 13 may be a diaphragm that does not completely block the partial ions but exhibits the effect of limiting a movement amount of ion species to some extent.

The diaphragm 13 can be formed, for example, using an ion exchange membrane such as NEOSEPTA (registered trademark) of ASTOM Corporation, SELEMION (registered trademark) and Aciplex (registered trademark) of AGC Inc., Fumasep (registered trademark) and fumapem (registered trademark) of Fumatech BWT GmbH, Nafion (registered trademark) of DuPont, which is a fluorocarbon resin formed of sulfonated and polymerized tetrafluoroethylene, lewabrane (registered trademark) of LANXESS AG, IONSEP (registered trademark) of IONTECH Inc., Mustang (registered trademark) of PALL Corporation, relax (registered trademark) of Mega A.S., GORE-TEX (registered trademark) of W.L. Gore & Associates GmbH, Sustainion (registered trademark) of DIOXIDE MATERIALS, or PiperION (registered trademark) of Versogen. The ion exchange membrane may be formed using a membrane whose basic structure is hydrocarbon, for instance. An anion exchange membrane may be formed using a membrane having an amine group, for instance. In the case where an electrolytic solution contained in a second cathode supply fluid and an electrolytic solution contained in an anode supply fluid, which will be described later, are different in pH, by forming the diaphragm 13 using a bipolar membrane in which a cation exchange membrane and an anion exchange membrane are stacked, it is possible to keep the pH of these electrolytic solutions stable during their use.

The diaphragm 13 may be formed using, for example, a material such as: a porous membrane of a silicone resin, a fluorine-based resin such as perfluoroalkoxyalkane (PFA), a perfluoroethylene-propane copolymer (FEP), polytetrafluoroethylene (PTFE), an ethylene-tetrafluoroethylene copolymer (ETFE), polyvinylidene fluoride (PVDF), polychlorotrifluoroethylene (PCTFE), an ethylene-chlorotrifluoroethylene copolymer (ECTFE), or polyethersulfone (PES), or ceramic; or an insulating porous body such as a glass filter, a filling filled with agar or zeolite, or oxide. A hydrophilic porous membrane is especially preferable as the material of the diaphragm 13 because its clogging with bubbles can be reduced.

The cathode 11, the anode 12, and the diaphragm 13 are stacked to form an electrochemical reaction cell EC. The electrochemical reaction structure 10 may have a cell stack in which a plurality of the electrochemical reaction cells EC are stacked. Forming the cell stack results in an increase in the reaction amount of the carbon dioxide per unit area, enabling an increase in the production amount of the carbon compound. The number of the plurality of the electrochemical reaction cells EC stacked is preferably not less than 10 nor more than 150, for instance.

The flow path plate 14 has the cathode chamber 140. The cathode chamber 140 is provided in a surface of the flow path plate 14 to face the cathode 11 and can form a cathode flow path. The cathode flow path has an inlet (cathode flow path inlet) through which a fluid (cathode supply fluid) is supplied to the cathode chamber 140 and an outlet (cathode flow path outlet) through which a fluid (cathode discharge fluid) is discharged from the cathode chamber 140. The cathode supply fluid contains a gas of the reducible material. The planar shape of the cathode flow path is, but is not limited to, a serpentine shape, for instance. The flow path in the serpentine shape has a plurality of turnback sections on the surface, of the flow path plate 14, where the cathode chamber 140 is formed. The number of the turnback sections is not limited. The flow path plate 14 can be formed using a conductive material such as a metal material or a carbon material.

The flow path plate 15 has the anode chamber 150. The anode chamber 150 is provided in a surface of the flow path plate 15 to face the anode 12 and can form an anode flow path. The anode chamber 150 is provided opposite the cathode chamber 140 across the electrochemical reaction cell EC and faces the cathode chamber 140 with the electrochemical reaction cell EC therebetween. The planar shape of the anode flow path is, but is not limited to, a serpentine shape, for instance. The flow path in the serpentine shape has a plurality of turnback sections on the surface, of the flow path plate 15, where the anode chamber 150 is formed. The number of the turnback sections is not limited. The flow path plate 15 can be formed using a conductive material such as a metal material or a carbon material.

The current collector 16 is electrically connected to the cathode 11. For example, the current collector 16 may be provided on the flow path plate 14 opposite the cathode 11 and electrically connected to the cathode 11 through the flow path plate 14. The current collector 17 is electrically connected to the anode 12. For example, the current collector 17 may be provided on the flow path plate 15 opposite the anode 12 and electrically connected to the anode 12 through the flow path plate 15. The current collector 16 and the current collector 17 can each be formed using a conductive material containing a metal element such as titanium.

The current collector 16 and the current collector 17 may be connected to a power source 20. The power source 20 is capable of supplying power to the electrochemical reaction structure 10, for instance. The power source 20 is capable of supplying the electrochemical reaction structure 10 with a voltage or a current for causing electrolytic reactions such as the oxidation reaction and the reduction reaction and is electrically connected to the cathode 11 and the anode 12. The reduction reaction in the cathode 11 and the oxidation reaction in the anode 12 are caused using the electric energy supplied from the power source 20. The power source 20 is connected to the current collector 16 and the current collector 17 by wiring, for instance. Between the electrochemical reaction structure 10 and the power source 20, electric devices such as an inverter, a converter, and a battery may be installed as required. The method of driving the electrochemical reaction structure 10 may be of a constant-voltage type or a constant-current type.

The power source 20 may be a typical commercial power source, battery, or the like or may be a power source that converts renewable energy into electric energy to supply it. Examples of such a power source include a power source that converts kinetic energy or potential energy such as wind power, hydropower, geothermal power, or tidal power into electric energy, a power source such as a solar cell having a photoelectric conversion element that converts light energy into electric energy, a power source, such as a fuel cell or a storage battery, that converts chemical energy into electric energy, and a power source such as a device that converts vibrational energy such as sound into electric energy. The photoelectric conversion element has a function of charge separation using the energy of irradiated light such as sunlight. Examples of the photoelectric conversion element include a pin-junction solar cell, a pn-junction solar cell, an amorphous silicon solar cell, a multijunction solar cell, a monocrystalline silicon solar cell, a polycrystalline silicon solar cell, a dye-sensitized solar cell, and an organic thin-film solar cell. Further, the photoelectric conversion element may be stacked with at least one of the cathode 11 and the anode 12 inside the electrochemical reaction structure 10.

The power source 20 is capable of adjusting the current or the voltage that is to be supplied to the electrochemical reaction structure 10, for instance. The power source 20 may have a power controller that adjusts the current or the voltage that is to be supplied to the electrochemical reaction structure 10, for instance. The power source 20 may have a function of adjusting a pressure in the cathode chamber 140 or a pressure in the anode chamber 150 by adjusting the current or the voltage that is to be supplied to the electrochemical reaction structure 10. The power source 20 may be provided outside the electrochemical reaction structure 10.

The flow path P1 is connected to the inlet of the cathode chamber 140. In the flow path P1, the fluid (cathode supply fluid) to be supplied to the cathode chamber 140 can flow. The cathode supply fluid contains carbon dioxide. The cathode supply fluid may be a gas containing gaseous carbon dioxide or an electrolytic solution containing carbon dioxide.

The flow path P1 may be connected to a carbon dioxide supply source. The carbon dioxide supply source may have or may be connected to a carbon dioxide separation and recovery device. The carbon dioxide gas from the carbon dioxide separation and recovery device can be supplied to the flow path P1 directly or after being stored once. Examples of the carbon dioxide supply source include a thermal power station, facilities having various kinds of incinerators or combustion furnaces such as a waste incinerator, a steel plant, and facilities having a blast furnace. The carbon dioxide supply source is not limited to any of these facilities and may be any other factory where carbon dioxide is generated.

The flow path P2 is connected to the anode inlet of the anode chamber 150. In the flow path P2, the liquid (anode supply fluid) to be supplied to the anode chamber 150 can flow. The anode supply fluid contains water or an electrolytic solution. The flow path P2 may be connected to an anode solution supply source. The anode solution supply source is capable of supplying the electrolytic solution used in the anode supply fluid, for instance.

The flow path P3 is connected to the cathode outlet of the cathode chamber 140. In the flow path P3, the fluid (cathode discharge fluid) discharged from the cathode chamber 140 can flow. The cathode discharge fluid contains the carbon compound and hydrogen produced through the reduction reaction in the cathode 11 and part of the carbon dioxide gas or part of the electrolytic solution contained in the cathode supply fluid.

The flow path P4 is connected to the anode outlet of the anode chamber 150. In the flow path P4, a fluid (anode discharge fluid) discharged from the anode chamber 150 can flow. The anode discharge fluid contains, for example, the gaseous oxygen produced through the oxidation reaction in the anode 12, the carbon dioxide that has moved from the cathode chamber 140 or from the electrolytic solution, and part of the water or the electrolytic solution contained in the anode supply fluid.

The flow paths P1, P2, P3, P4 can each be formed using a pipe, for instance.

The gas-liquid separator 18 is provided in the middle of the anode flow path or on the anode flow path. The gas-liquid separator 18 is capable of separating (removing) at least part of the oxygen-containing gas from an anode fluid that flows through the anode flow path, by processing the anode fluid. The gas-liquid separator 18 is provided inside or outside the electrochemical reaction structure 10. The separated gas may contain the carbon dioxide that has moved to the anode chamber 150 from the cathode chamber 140 or from the electrolytic solution. The gas-liquid separator 18 may be provided outside the electrochemical reaction structure 10.

As the electrolytic solution, usable is an aqueous solution containing water, for example, an aqueous solution containing a desired electrolyte. This solution is preferably an aqueous solution that promotes the oxidation reaction of water. Examples of the aqueous solution containing the electrolyte include aqueous solutions containing phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃⁻), or hydroxide ions (OH⁻).

As the aforesaid electrolytic solution, usable is an ionic liquid that is formed of salt of anions such as imidazolium ions or pyridinium ions and anions such as BF₄⁻ or PF₆⁻ and that is in a liquid form in a wide temperature range, or its aqueous solution. Other examples of the electrolytic solution include solutions of amine such as ethanolamine, imidazole, and pyridine, and their aqueous solutions. Examples of the amine include primary amine, secondary amine, and tertiary amine. These electrolytic solutions may be high in ion conductivity, have a property of absorbing carbon dioxide, and have a characteristic of decreasing reduction energy.

Examples of the primary amine include methylamine, ethylamine, propylamine, butylamine, pentylamine, and hexylamine. A hydrocarbon of the amine may be replaced by alcohol, halogen, or the like. Examples of the amine whose hydrocarbon is replaced include methanolamine, ethanolamine, and chloromethylamine. Further, an unsaturated bond may be present therein. The same applies to hydrocarbons of the secondary amine and the tertiary amine.

Examples of the secondary amine include dimethylamine, diethylamine, dipropylamine, dibutylamine, dipentylamine, dihexylamine, dimethanolamine, diethanolamine, and dipropanolamine. The replaced hydrocarbons may be different. This also applies to the tertiary amine. Examples of one whose hydrocarbons are different include methylethylamine and methylpropylamine.

Examples of the tertiary amine include trimethylamine, triethylamine, tripropylamine, tributylamine, trihexylamine, trimethanolamine, triethanolamine, tripropanolamine, tributanolamine, trihexanolamine, methyldiethylamine, and methyldipropylamine.

Examples of the cations of the ionic liquid include 1-ethyl-3-methylimidazolium ions, 1-methyl-3-propylimidazolium ions, 1-butyl-3-methylimidazole ions, 1-methyl-3-pentylimidazolium ions, and 1-hexyl-3-methylimidazolium ions.

The second position of the imidazolium ion may be replaced. Examples of the cation resulting from the replacement of the second position of the imidazolium ion include a 1-ethyl-2,3-dimethylimidazolium ion, a 1,2-dimethyl-3-propylimidazolium ion, a 1-butyl-2,3-dimethylimidazolium ion, a 1,2-dimethyl-3-pentylimidazolium ion, and a 1-hexyl-2,3-dimethylimidazolium ion.

Examples of the pyridinium ions include methylpyridinium, ethylpyridinium, propylpyridinium, butylpyridinium, pentylpyridinium, and hexylpyridinium. In the imidazolium ion and the pyridinium ion, an alkyl group may be replaced, or an unsaturated bond may be present.

Examples of the anions include fluoride ions (F⁻), chloride ions (Cl⁻), bromide ions (Br⁻), iodide ions (I⁻), BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(trifluoromethoxysulfonyl)imide, and bis(perfluoroethylsulfonyl)imide. The ionic liquid may be composed of dipolar ions formed of the cations and the anions that are connected by hydrocarbons. Note that a buffer solution such as a potassium phosphate solution may be supplied to the anode chamber 150 and a later-described cathode chamber 190.

The electrolytic solution contained in the anode supply fluid contains water which is the oxidizable material. Varying the amount of the water contained in the electrolytic solution or changing components of the electrolytic solution can change reactivity to change the selectivity of the substance to be reduced or a ratio of produced substances. The electrolytic solution may contain a redox couple as required. Examples of the redox couple include Fe³⁺/Fe²⁺ and IO³⁻/I⁻.

Next, an example of a method of operating the electrochemical reaction device 1 will be described. The description here is about a case of reducing carbon dioxide to produce mainly carbon monoxide and oxidizing water to produce oxygen. A cathode supply fluid containing carbon dioxide is supplied to the cathode chamber 140, an anode supply fluid containing an electrolytic solution is supplied to the anode chamber 150, and a voltage equal to or higher than an electrolysis voltage is applied across the cathode 11 and the anode 12 by the power source 20 supplying power. Then, an oxidation reaction of water occurs near the anode 12 on the electrolytic solution. As represented by the following equation (1), the oxidation of the water contained in the electrolytic solution occurs, electrons are lost, and oxygen and hydrogen ions are produced. The produced hydrogen ions partly move to the cathode chamber 140 through the diaphragm 13.

2H₂O → 4H⁺ + O₂ + 4e⁻ (1)

When the hydrogen ions (H⁺) produced in the anode 12 side reach the vicinity of the cathode 11 and electrons (e⁻) are supplied to the cathode 11 from the power source 20, a reduction reaction of the carbon dioxide occurs. As represented by the following equation (2), due to the hydrogen ions (H⁺) having moved to the vicinity of the cathode 11 and the electrons (e-) supplied from the power source 20, the carbon dioxide is reduced and carbon monoxide is produced.

2CO₂ + 4H⁺ + 4e⁻ → 2CO + 2H₂O (2)

A gas component contained in an anode discharge fluid discharged from the anode chamber 150 is mainly composed of the oxygen gas as shown in the above equation (1). In the reactions in the cathode 11 and the anode 12, the carbon dioxide contained in the cathode supply fluid supplied to the cathode chamber 140 is mostly reduced in the cathode 11, but partly flows as carbon dioxide or as ions such as carbonate ions (CO₃²⁻) or hydrogen carbonate ions (HCO₃⁻) to the anode 12 side. When the pH of an anode solution (electrolytic solution) becomes, for example, 6 or less, the carbonate ions or the hydrogen carbonate ions having moved to the anode 12 side come to be present as carbon dioxide due to a chemical equilibrium reaction, and are partly dissolved in the anode solution. A carbon dioxide gas that cannot be completely dissolved in the anode solution is contained with the oxygen gas in the anode discharge fluid discharged from the anode chamber 150. Under typical operation conditions of the electrochemical reaction structure 10, an abundance ratio of the carbon dioxide gas to the oxygen gas in the anode discharge fluid sometimes increases up to, for example, 2: 1.

The flow path P3 may be connected to a valuable material production device. Examples of the valuable material production device include a chemical synthesis device that produces a valuable material through a chemical synthesis using a raw material such as carbon monoxide. Examples of the valuable material include methanol produced by a methanol production device, hydrocarbon, synthetic gasoline, light oil, and jet fuel produced by a Fischer-Tropsch reactor, and an olefin compound produced by an olefin production device. Providing the valuable material production device at a subsequent stage of the electrochemical reaction structure 10 makes it possible to produce a valuable material having a high added value from the products in the electrochemical reaction structure 10.

The kind of the chemical synthesis device is not limited as long as it is capable of synthesizing, through a reaction, another substance from the reduction product in the cathode 11. Examples of the reaction caused by the chemical synthesis device using the reduction product include a chemical reaction, an electrochemical reaction, and a biological conversion reaction using algae, enzyme, yeast, or bacteria.

The flow path P3 may be connected to a product separator instead of being connected to the valuable material production device. The product separator is capable of separating a carbon compound such as carbon monoxide which is a product, by separating the surplus carbon dioxide from a cathode discharge fluid or removing water in the cathode discharge fluid. For example, in the case where the carbon monoxide gas is produced in the electrochemical reaction structure 10 as is shown by the above equation (2), by using, as a raw material, a mixed gas containing the produced carbon monoxide gas and a hydrogen gas which is a by-product in the reduction reaction, it is possible to produce methanol through a methanol synthesis or produce jet fuel, light oil, or the like through a Fischer-Tropsch synthesis. This is not limiting, and the flow path P3 may be connected to a tank storing a gas containing the carbon compound such as carbon monoxide, instead of being connected to the valuable material production device.

The reduction product may contain carbon dioxide, carbon monoxide, and hydrogen produced through an electrolysis of water. The concentration of the hydrogen can be adjusted as desired depending on how it is used. In the case where the hydrogen is used in a chemical synthesis device, the cathode discharge fluid may be used after the carbon dioxide is separated therefrom so that a mixture of the carbon monoxide and the hydrogen can be used. In the case where the hydrogen is not used, only the carbon monoxide is separated from the cathode discharge fluid. In the case where methanol is produced, by adjusting the number of moles of the hydrogen to about twice the number of moles of the carbon monoxide, it is possible to use the hydrogen produced in the cathode 11 as a valuable material. Further, in the cathode 11, by setting the reaction condition so as to inhibit the hydrogen-producing side reaction, it is possible to adjust the concentration of the hydrogen in the reduction product to a value within a range of not less than 0.1% nor more than 5% in terms of volume percentage. This makes it possible to use the electrochemical reduction device as a carbon monoxide production device that produces high-concentration carbon monoxide.

When the electrolytic reaction of the reducible material progresses, the reducible material such as carbon dioxide is converted into the reduction product such as a carbon compound in the cathode chamber 140. Meanwhile, due to the electrolysis reaction of the reducible material, the gas of the reducible material in the cathode chamber 140 moves to the anode chamber 150 through the electrolytic solution simultaneously with the electrolytic reaction. Further, in the anode chamber 150, a gas of the oxidation product such as oxygen produced through the oxidation of the oxidizable material such as water is generated. Near the inlet of the anode flow path, the anode fluid in the anode chamber 150 is covered by the anode supply fluid supplied from the flow path P2, but as it approaches the outlet of the anode flow path, a gas-liquid two-phase flow of a liquid such as the electrolytic solution and a gas such as the oxygen is formed in the anode flow path. The gas-liquid two-phase flow causes a decline in electrolysis efficiency. Further, the electrolytic solution of the anode fluid not only plays a role in moving ions but also plays a role in cooling the electrochemical reaction cell EC. As it goes closer to the outlet, the anode flow path has a larger amount of the gas produced through the electrolytic reaction and the cooling effect accordingly declines.

In the electrochemical reaction device of the arrangement, on the other hand, the decline in electrolysis efficiency can be reduced because it has the gas-liquid separator 18 and at least part of the oxygen-containing gas is separated from the anode fluid that flows through the anode flow path. In addition, the decline in the cooling effect can be reduced.

As for the carbon dioxide in the cathode chamber 140 and the electrolytic solution in the anode chamber 150, the electrolytic solution in the anode chamber 150 presses the gas in the cathode chamber 140 to adjust a pressure balance between the cathode chamber 140 and the anode chamber 150 to inhibit the reaction product in the cathode chamber 140 and the reaction product in the anode chamber 150 from mixing, making it possible to discharge the reaction product in the cathode chamber 140 to the flow path P3 and discharge the reaction product in the anode chamber 150 to the flow path P4. If the gas component in the anode chamber 150 filled with the electrolytic solution increases, this pressure balance cannot be kept, involving a risk of the mixing of the gas in the cathode chamber 140 and the gas in the anode chamber 150.

In the electrochemical reaction device of the arrangement, on the other hand, it is possible to keep the pressure balance between the cathode chamber 140 and the anode chamber 150 because it has the gas-liquid separator 18, and at least part of the oxygen-containing gas is separated from the anode fluid that flows through the anode flow path.

The electrochemical reaction device of the arrangement can have improved life and improved electrolysis efficiency because, owing to its gas-liquid separator 18, it is possible to reduce the decline in electrolysis efficiency, reduce the decline in the cooling effect, and keep the pressure balance between the cathode chamber 140 and the anode chamber 150 as described above.

The electrolytic reactions such as the oxidation reaction and the reduction reaction by the electrochemical reaction structure 10 are preferably carried out under a temperature that is not lower than room temperature (for example, 25°C) nor higher than 100°C and does not cause the electrolytic solutions to vaporize. The above temperature is preferably not lower than 60°C nor higher than 95°C, and more preferably not lower than 60°C nor higher than 80°C. To make the temperature lower than room temperature, a cooling device such as a chiller is required, which may lower the overall energy efficiency of the system. A temperature over 100°C causes the water of the electrolytic solutions to turn into vapor to increase resistance, which may reduce electrolysis efficiency.

Current density in the cathode 11 is not limited, but to increase the production amount of the reduction product per unit area, the current density is preferably higher. The current density is preferably not less than 100 mA/cm² nor more than 1.5 A/cm², and more preferably not less than 300 mA/m² nor more than 700 mA/m². The current density being less than 100 mA/cm² results in a small production amount of the reduction product per unit area and thus necessitates a large area. The current density being over 1.5 A/cm² results in an increase in the hydrogen-producing side reaction to decrease the concentration of the reduction product.

In the case where an increase in the current density is accompanied by an increase in Joule heat, since the temperature rises to an appropriate temperature or higher, a cooling mechanism may be provided in or near the electrochemical reaction structure 10. The cooling mechanism may be of a water cooling type or an air cooling type. The temperature of the electrochemical reaction structure 10, even if higher than room temperature, may be left as it is as long as it is 100°C or lower.

### (Second Arrangement)

In the case where a gas (cathode gas) containing the reducible material such as carbon dioxide is supplied to the cathode chamber 140, the electrochemical reaction structure 10 may have a second cathode chamber forming a second cathode flow path, between the cathode 11 and the diaphragm 13, and an electrolytic solution may be supplied to the second cathode flow path. FIG. 2 is a schematic view illustrating an example configuration of an electrochemical reaction device of a second arrangement. As illustrated in FIG. 2, the electrochemical reaction device 1 may further have a flow path plate 19, the cathode chamber 190, a flow path P5, and a flow path P6. The following will describe parts different from the electrochemical reaction device of the first arrangement, and for the other parts, the description of the electrochemical reaction device of the first arrangement can be referred to as required.

The flow path plate 19 has the cathode chamber 190. The cathode chamber 190 is provided in a surface of the flow path plate 19 to face the cathode 11 and can form the second cathode flow path. The cathode chamber 190 is arranged on the cathode 11 opposite the cathode chamber 140. The cathode chamber 190 has an inlet through which a fluid is supplied to the cathode chamber 190 and an outlet through which a fluid is discharged from the cathode chamber 190. For the other description of the flow path plate 19, the description of the flow path plate 14 or the flow path plate 15 may be referred to as required.

The flow path P5 is connected to the inlet of the cathode chamber 190. In the flow path P5, a second cathode supply fluid to be supplied to the cathode chamber 190 can flow. The second cathode supply fluid contains the electrolytic solution. The electrolytic solution may be one containing carbon dioxide or may be one not containing carbon dioxide. The flow path P5 may be connected to a cathode solution supply source. The cathode solution supply source is capable of supplying the electrolytic solution used in the second cathode supply fluid, for instance. In the case where the electrolytic solution contained in the second cathode supply fluid is the same as the electrolytic solution contained in the anode supply fluid, the flow path P5 may be connected to the aforesaid anode solution supply source.

The flow path P6 is connected to the outlet of the cathode chamber 190. In the flow path P6, a second cathode discharge fluid discharged from the cathode chamber 190 can flow. The second cathode discharge fluid contains the carbon compound and the hydrogen, which are produced through the reduction reaction in the cathode 11, and the electrolytic solution. After the second cathode discharge fluid is separated into a gas component and a liquid component by a gas-liquid separator, the liquid component may be reused by being supplied as the electrolytic solution to the flow path P5. In this case, another flow path connecting the flow path P5 and the flow path P6 and a pump in the middle of the other flow path may be provided so that the separated liquid component can be returned to the flow path P5.

The flow paths P5, P6 can each be formed using a pipe, for instance.

The electrolytic solution contained in the second cathode supply fluid is preferably a solution high in carbon dioxide absorptance. The carbon dioxide in the electrolytic solution does not necessarily have to be in a dissolved state, and the carbon dioxide may be in a mixed state as bubbles in the electrolytic solution. Examples of the carbon dioxide-containing electrolytic solution include aqueous solutions containing hydrogen carbonate or carbonate such as lithium hydrogen carbonate (LiHCO₃), sodium hydrogen carbonate (NaHCO₃), potassium hydrogen carbonate (KHCO₃), cesium hydrogen carbonate (CsHCO₃), sodium carbonate (Na₂CO₃), and potassium carbonate (K₂CO₃), phosphoric acid, boric acid, or the like. The carbon dioxide-containing electrolytic solution may contain any of alcohols such as methanol and ethanol, and ketones such as acetone or may be an alcohol solution or a ketone solution. The electrolytic solution may be an electrolytic solution containing a carbon dioxide absorbent that lowers the reduction potential of carbon dioxide, has high ion conductivity, and absorbs carbon dioxide. The electrolytic solution contained in the second cathode supply fluid may contain a substance usable in the electrolytic solution contained in the anode supply fluid.

### (Third Arrangement)

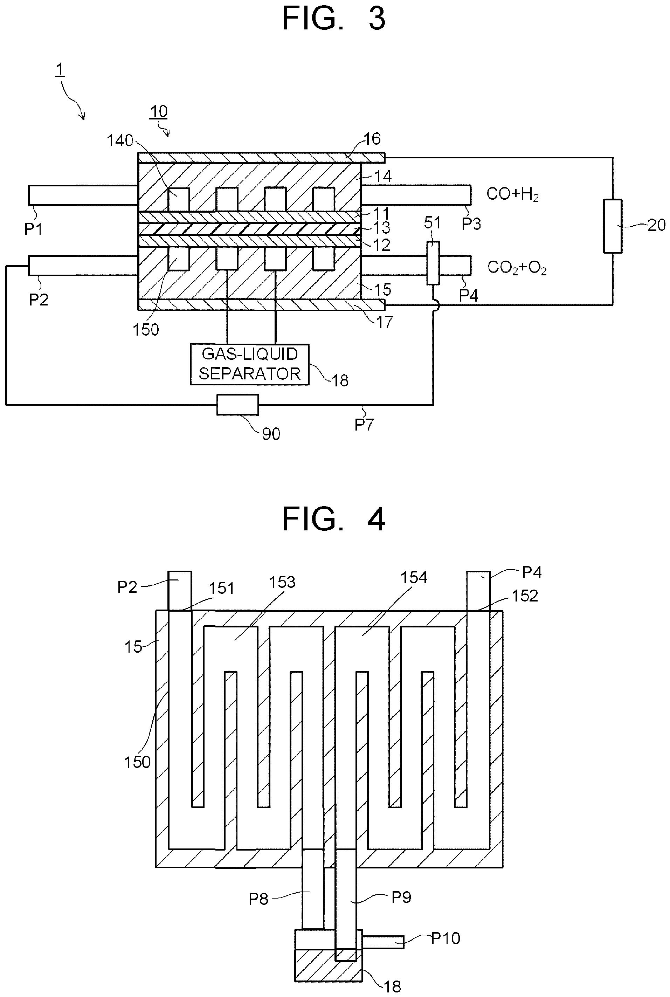

FIG. 3 is a schematic view illustrating an example configuration of an electrochemical reaction device of a third arrangement. As illustrated in FIG. 3, the electrochemical reaction device 1 may further have a gas-liquid separator 51, a flow path P7, and a pump 90. The following will describe parts different from the electrochemical reaction device of the first arrangement, and for the other parts, the description of the electrochemical reaction device of the first arrangement can be referred to as required.

The gas-liquid separator 51 is provided in the middle of the flow path P4.

The flow path P7 connects an outlet of the gas-liquid separator 51 and the flow path P2 or an anode fluid supply source, for instance. The flow path P7 can be formed using a pipe, for instance.

The pump 90 is provided in the middle of the flow path P7.

The gas-liquid separator 51 separates the anode discharge fluid into a liquid component such as the electrolytic solution and a gas component such as oxygen, hydrogen, and carbon dioxide, and the liquid component is returned to the flow path P2 by the pump 90 through the flow path P7, whereby the anode solution can be circulated. Through the flow path P4, the gas component may be recovered or may be supplied to a subsequent-stage device.

### (Fourth Arrangement)

FIG. 4 is a schematic view illustrating an example configuration of an electrochemical reaction device of a fourth arrangement. FIG. 4 illustrates an example structure of an anode flow path. The anode flow path has a serpentine planar shape and has an inlet (anode flow path inlet) 151 through which a fluid is supplied to the anode chamber 150, an outlet (anode flow path outlet) 152 through which a fluid is discharged from the anode chamber 150, an anode flow path part 153, and an anode flow path part 154. The following will describe parts different from the electrochemical reaction device of the first arrangement, and for the other parts, the description of the electrochemical reaction device of the first arrangement can be referred to as required.

The anode flow path inlet 151 is connected to the flow path P2. The anode flow path outlet 152 is connected to the flow path P4.

The anode flow path part 153 is provided in the flow path plate 15 and faces the anode 12. The anode flow path part 153 is provided upstream of the anode flow path part 154 in the anode flow path. An inlet of the anode flow path part 153 is connected to the anode flow path inlet 151. An outlet of the anode flow path part 153 is connected to a flow path P8. The anode flow path part 153 has a serpentine planar shape.

The anode flow path part 154 is provided in the flow path plate 15 and faces the anode 12. The anode flow path part 154 is provided downstream of the anode flow path part 153 in the anode flow path. An inlet of the anode flow path part 154 is connected to a flow path P9. An outlet of the anode flow path part 154 is connected to the anode flow path outlet 152. The anode flow path part 154 may be physically separated from the anode flow path part 153. The anode flow path part 154 has a serpentine planar shape.

The gas-liquid separator 18 has, for instance: a container having a fluid inlet, a liquid outlet, and a gas outlet and capable of storing the anode fluid; and a gas-liquid separation membrane provided in the container.

In the flow path P8, the anode fluid (unprocessed anode fluid) to be supplied to the gas-liquid separator 18 from the anode flow path part 153 flows. The flow path P8 is connected to the fluid inlet of the gas-liquid separator 18. The flow path P8 may pass through the flow path plate 15.

In the flow path P9, the anode fluid (processed anode fluid) to be supplied to the anode flow path part 154 from the gas-liquid separator 18 flows. The flow path P9 is connected to the liquid outlet of the gas-liquid separator 18. The flow path P9 may pass through the flow path plate 15.

In a flow path P10, the oxygen-containing gas separated by the gas-liquid separator 18 flows. The flow path P10 is connected to the gas outlet of the gas-liquid separator 18. Through the flow path P10, the separated oxygen-containing gas may be discharged to the outside or may be supplied to another device.

The flow paths P8, P9, P10 can each be formed using a pipe, for instance.

As described above, the electrochemical reaction device of the fourth arrangement is capable of separating the oxygen-containing gas from the anode fluid that flows through the anode flow path even in the case where it has the gas-liquid separator 18 outside the flow path plate 15.

### (Fifth Arrangement)

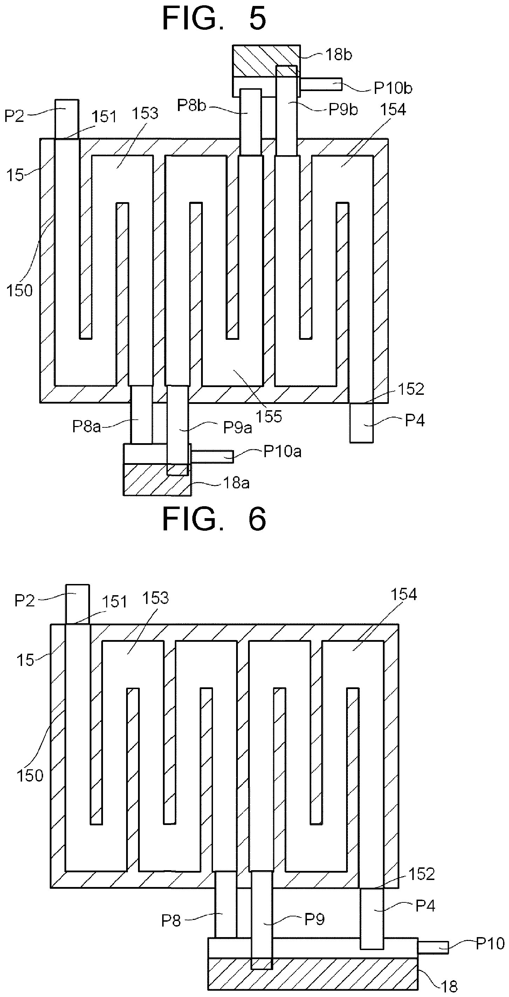

FIG. 5 is a schematic view illustrating an example configuration of an electrochemical reaction device of a fifth arrangement. FIG. 5 illustrates an example structure of an anode flow path. As illustrated in FIG. 5, the electrochemical reaction device has a gas-liquid separator 18a and a gas-liquid separator 18b. The anode flow path has a serpentine planar shape and has the inlet (anode flow path inlet) 151 through which a fluid is supplied to the anode chamber 150, the outlet (anode flow path outlet) 152 through which a fluid is discharged from the anode chamber 150, an anode flow path part 153, an anode flow path part 154, and an anode flow path part 155. The following will describe parts different from the electrochemical reaction device of the fourth arrangement, and for the other parts, the description of the electrochemical reaction device of the fourth arrangement can be referred to as required.

The anode flow path inlet 151 is connected to the flow path P2. The anode flow path outlet 152 is connected to the flow path P4.

The anode flow path part 153 is provided in the flow path plate 15 and faces the anode 12. The anode flow path part 153 is provided upstream of the anode flow path part 154 in the anode flow path. An inlet of the anode flow path part 153 is connected to the anode flow path inlet 151. An outlet of the anode flow path part 153 is connected to a flow path P8a. The anode flow path part 153 has a serpentine planar shape.

The anode flow path part 154 is provided in the flow path plate 15 and faces the anode 12. The anode flow path part 154 is provided downstream of the anode flow path part 153 in the anode flow path. An inlet of the anode flow path part 154 is connected to a flow path P9b. An outlet of the anode flow path part 154 is connected to the anode flow path outlet 152. The anode flow path part 154 may be physically separated from the anode flow path part 153. The anode flow path part 154 has a serpentine planar shape.

The anode flow path part 155 is provided in the flow path plate 15 and faces the anode 12. In the anode flow path, the anode flow path part 155 is provided downstream of the anode flow path part 153 and is provided upstream of the anode flow path part 154. An inlet of the anode flow path part 155 is connected to a flow path P9a. An outlet of the anode flow path part 155 is connected to a flow path P8b. The anode flow path part 155 may be physically separated from the anode flow path part 153 and the anode flow path part 154. The anode flow path part 155 has a serpentine planar shape.

The gas-liquid separator 18a has, for instance: a first container having a first fluid inlet, a first liquid outlet, and a first gas outlet and capable of storing the anode fluid; and a first gas-liquid separation membrane provided in the first container. For the other description of the gas-liquid separator 18a, the description of the gas-liquid separator 18 can be referred to as required.

The gas-liquid separator 18b has, for instance: a second container having a second fluid inlet, a second liquid outlet, and a second gas outlet and capable of storing the anode fluid; and a second gas-liquid separation membrane provided in the second container. For the other description of the gas-liquid separator 18b, the description of the gas-liquid separator 18 can be referred to as required.

In the flow path P8a, the anode fluid (unprocessed anode fluid) to be supplied to the gas-liquid separator 18a from the anode flow path part 153 flows. The flow path P8a is connected to the first fluid inlet of the gas-liquid separator 18a. The flow path P8a may pass through the flow path plate 15.

In the flow path P9a, the anode fluid (anode fluid processed by the gas-liquid separator 18a) to be supplied to the anode flow path part 155 from the gas-liquid separator 18a flows. The flow path P9a is connected to the first liquid outlet of the gas-liquid separator 18a. The flow path P9a may pass through the flow path plate 15.

In a flow path P10a, the oxygen-containing gas separated by the gas-liquid separator 18a flows. The flow path P10a is connected to the first gas outlet of the gas-liquid separator 18a. Through the flow path P10a, the separated oxygen-containing gas may be discharged to the outside or may be supplied to another device.

In the flow path P8b, the anode fluid (anode fluid processed by the gas-liquid separator 18a) to be supplied to the gas-liquid separator 18b from the anode flow path part 155 flows. The flow path P8b is connected to the second liquid inlet of the gas-liquid separator 18b. The flow path P8b may pass through the flow path plate 15.

In the flow path P9b, the anode fluid (anode fluid processed by the gas-liquid separator 18b) to be supplied to the anode flow path part 154 from the gas-liquid separator 18b flows. The flow path P9b is connected to the second liquid outlet of the gas-liquid separator 18b. The flow path P9b may pass through the flow path plate 15.

In a flow path P10b, the oxygen-containing gas separated by the gas-liquid separator 18b flows. The flow path P10b is connected to the second gas outlet of the gas-liquid separator 18b. Through the flow path P10b, the separated oxygen-containing gas may be discharged to the outside or may be supplied to another device.

Providing the plurality of the gas-liquid separators 18 makes it possible to improve the effect of removing the gas from the anode fluid. Consequently, it is possible to improve the effects of reducing a decline in the cooling effect and keeping the pressure balance between the cathode chamber 140 and the anode chamber 150.

### (Sixth Arrangement)

FIG. 6 is a schematic view illustrating an example configuration of an electrochemical reaction device of a sixth arrangement. FIG. 6 illustrates an example structure of an anode flow path. As illustrated in FIG. 6, in the electrochemical reaction device, the gas-liquid separator 18 instead of the gas-liquid separator 51 may be connected to the flow path P4. The following will describe parts different from the electrochemical reaction device of the fourth arrangement, and for the other parts, the description of the electrochemical reaction device of the fourth arrangement can be referred to as required.

The gas-liquid separator 18 further has a second fluid inlet connected to the flow path P4. The anode discharge fluid can be separated into the liquid component such as the electrolytic solution and the gas component such as oxygen, hydrogen, and carbon dioxide by the gas-liquid separator 18. Through the gas-liquid separator 18, the gas component may be recovered or may be supplied to a subsequent-stage device. Through the gas-liquid separator 18, the liquid component may be supplied to the flow path P2. For the other description of the gas-liquid separator 18, the description of the gas-liquid separator 18 in the fourth arrangement can be referred to as required. The use of the gas-liquid separator 18 as the gas-liquid separator that separates the gas from the anode fluid that flows through the flow path P4 enables the downsizing of the electrochemical reaction device.

### (Seventh Arrangement)

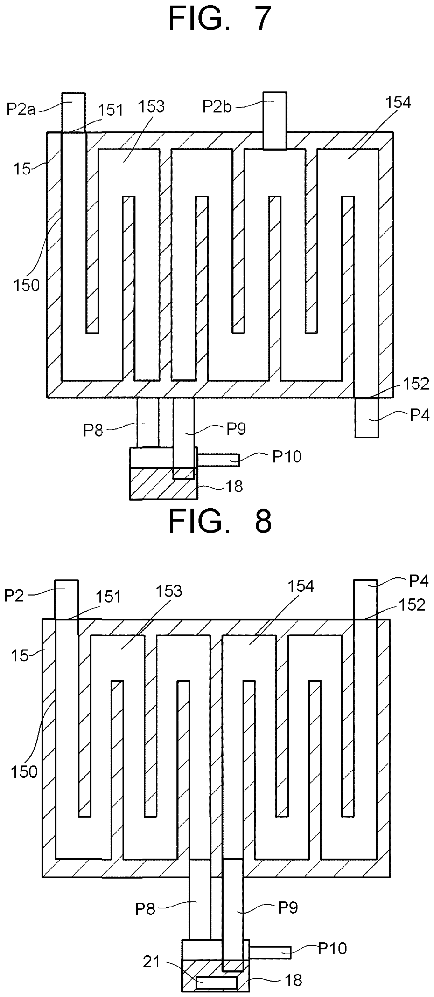

FIG. 7 is a schematic view illustrating an example configuration of an electrochemical reaction device of a seventh arrangement. FIG. 7 illustrates an example structure of an anode flow path. As illustrated in FIG. 7, the electrochemical reaction device has a flow path P2a and a flow path P2b. The following will describe parts different from the electrochemical reaction device of the fourth arrangement, and for the other parts, the description of the electrochemical reaction device of the fourth arrangement can be referred to as required.

The anode flow path inlet 151 is connected to the flow path P2a. For the other description of the flow path P2a, the description of the flow path P2 can be referred to as required.

A first inlet of the anode flow path part 154 is connected to the flow path P9. A second inlet of the anode flow path part 154 is provided downstream of the first inlet and is connected to the flow path P2b. The flow path P2b may be connected to an anode solution supply source. For the other description of the flow path P2b, the description of the flow path P2 can be referred to as required.

Providing the flow path P2a and the flow path P2b as the plurality of flow paths P2 makes it possible to relatively reduce the amount of the gas in a rear stage of the anode flow path.

### (Eighth Arrangement)

FIG. 8 is a schematic view illustrating an example configuration of an electrochemical reaction device of an eighth arrangement. FIG. 8 illustrates an example structure of an anode flow path. As illustrated in FIG. 8, the electrochemical reaction device has a removing part 21. The following will describe parts different from the electrochemical reaction device of the fourth arrangement, and for the other parts, the description of the electrochemical reaction device of the fourth arrangement can be referred to as required.

The removing part 21 is provided in the gas-liquid separator 18. The removing part 21 has at least one remover out of an ion remover and a radical remover.

The ion remover is capable of removing metal ions contained in the anode fluid. The metal ions may inhibit the reduction reaction of carbon dioxide. Examples of the metal ions include titanium ions, ferrous ions, ferric ions, cobalt ions, nickel ions, chromium ions, niobium ions, and iridium ions. The metal ions sometimes react with hydrogen peroxide generated in a side reaction of the carbon dioxide reduction, resulting in the production of hydroxyl radicals. Providing the ion remover makes it possible to prevent the carbon dioxide reduction reaction from being inhibited and to reduce the production of the hydroxyl radicals.

The radical remover is capable of removing radicals contained in the anode fluid. Examples of the radicals include hydroxyl radicals generated from the hydrogen peroxide generated in the side reaction of the carbon dioxide reduction. The radicals sometimes decrease the durability of the diaphragm 13 such as an electrolyte membrane. Providing the radical remover makes it possible to reduce the generation of the hydroxyl radicals to improve the durability of the diaphragm 13.

### (Ninth Arrangement)

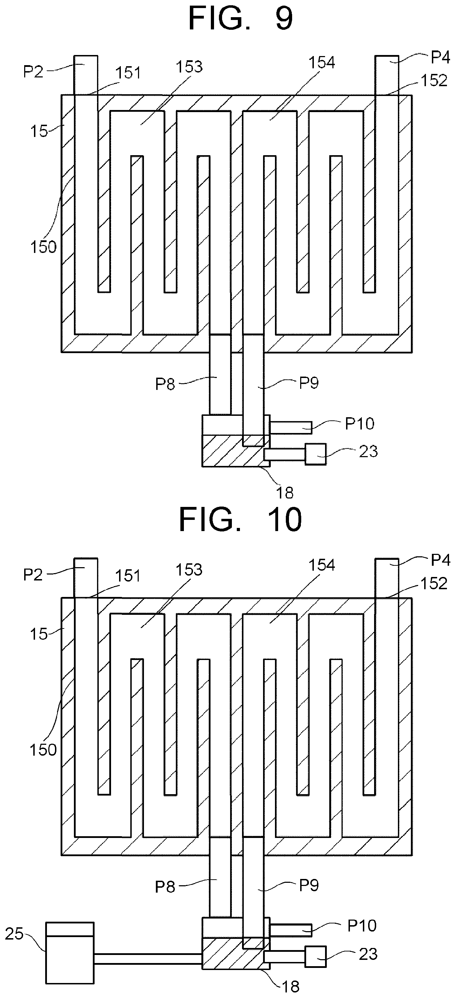

FIG. 9 is a schematic view illustrating an example configuration of an electrochemical reaction device of a ninth arrangement. FIG. 9 illustrates an example structure of an anode flow path. As illustrated in FIG. 9, the electrochemical reaction device has a detecting part 23. The following will describe parts different from the electrochemical reaction device of the fourth arrangement, and for the other parts, the description of the electrochemical reaction device of the fourth arrangement can be referred to as required.

The detecting part 23 has at least one detector out of a pH detector and an ion impurity detector. At least one detector is connected to the gas-liquid separator 18 through a flow path and is capable of detecting the pH of the anode fluid that flows from the gas-liquid separator 18 or the concentration of ion impurities therein. Examples of the ion impurities include potassium ions, sodium ions, cesium ions, titanium ions, ferrous ions, ferric ions, cobalt ions, nickel ions, chromium ions, niobium ions, and iridium ions. Providing the detecting part 23 makes it possible to confirm a composition change of the electrolyte in the anode fluid.

### (Tenth Arrangement)

FIG. 10 is a schematic view illustrating an example configuration of an electrochemical reaction device of a tenth arrangement. FIG. 10 illustrates an example structure of an anode flow path. As illustrated in FIG. 10, the electrochemical reaction device has a detecting part 23 and a pH adjusting part 25. The following will describe parts different from the electrochemical reaction device of the fourth arrangement, and for the other parts, the description of the electrochemical reaction device of the fourth arrangement can be referred to as required.

The detecting part 23 has a pH detector. The pH detector is connected to the gas-liquid separator 18 through a flow path and is capable of detecting the pH of the anode fluid that flows from the gas-liquid separator 18. Providing the detecting part 23 makes it possible to, for example, confirm a composition change of the electrolyte in the anode fluid.

The pH adjusting part 25 has, for example, a liquid supply source. The liquid supply source is capable of supplying the gas-liquid separator 18 through a flow path with water or an electrolytic solution whose concentration is adjusted as desired. This enables the adjustment of the pH of the anode fluid. The pH of the anode fluid is preferably not less than 6.0 nor more than 9.0, and more preferably not less than 7.0 nor more than 8.7. The pH adjusting part 25 may be controlled according to the detection result of the pH of the anode fluid detected by the detecting part 23 and adjust the pH of the anode fluid according to the detection result.

### (Eleventh Arrangement)

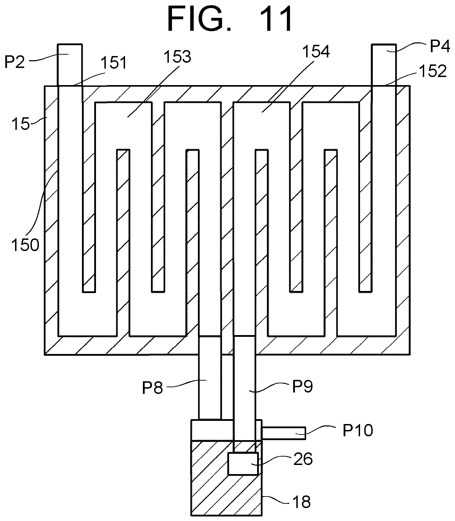

FIG. 11 is a schematic view illustrating an example configuration of an electrochemical reaction device of an eleventh arrangement. FIG. 11 illustrates an example structure of an anode flow path. As illustrated in FIG. 11, the electrochemical reaction device 1 has a recovery part 26. The following will describe parts different from the electrochemical reaction device of the fourth arrangement, and for the other parts, the description of the electrochemical reaction device of the fourth arrangement can be referred to as required.

The recovery part 26 is arranged in the gas-liquid separator 18. The recovery part 26 is capable of recovering a catalyst such as the anode catalyst from the anode fluid to the outside. The anode catalyst sometimes flows out from the anode 12 to the anode fluid. The recovery part 26 has a filter in the container of the gas-liquid separator 18. Providing the recovery part 26 enables the reuse of the catalyst.

### (Twelfth Arrangement)

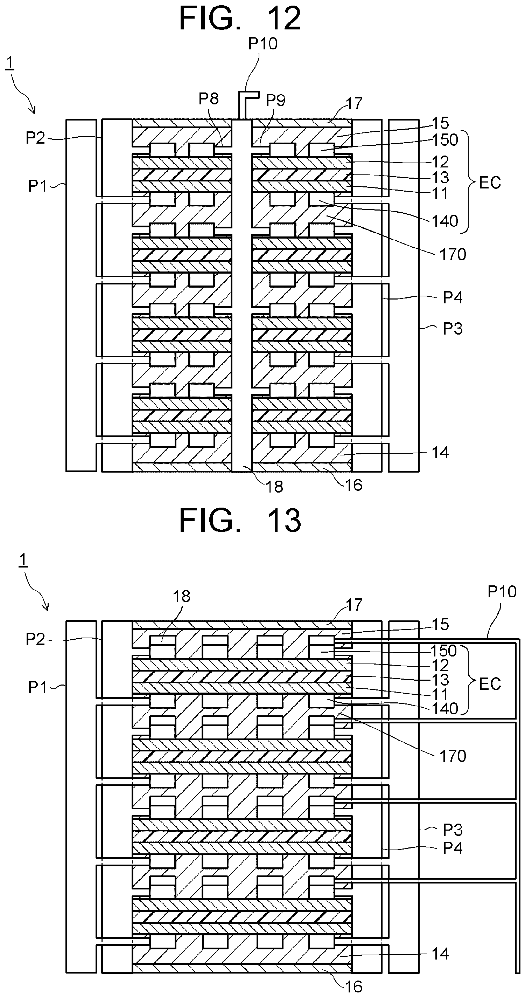

FIG. 12 is a schematic view illustrating an example configuration of an electrochemical reaction device of a twelfth arrangement. As illustrated in FIG. 12, the electrochemical reaction device 1 has a stack composed of a plurality of stacked electrochemical reaction cells EC. The following will describe parts different from the electrochemical reaction device of the first arrangement, and for the other parts, the description of the electrochemical reaction device of the first arrangement can be referred to as required.

The electrochemical reaction device 1 further has flow path plates 170 between the plurality of the electrochemical reaction cells EC. The flow path plates 170 each have the cathode chamber 140 provided on the cathode 11 side and the anode chamber 150 provided on the anode 12 side. One end of the cell stack is electrically connected to the current collector 16 through the flow path plate 14. The other end of the cell stack is electrically connected to the current collector 17 through the flow path plate 15. The current collector 16 and the current collector 17 are connected to the power source 20 similarly to those of the electrochemical reaction device illustrated in FIG. 1. For the other description of the flow path plates 170, the description of the flow path plate 14 or the flow path plate 15 may be referred to as required.

The plurality of the anode flow paths of the plurality of the electrochemical reaction cells EC are mutually connected in parallel. The inlets of the plurality of the anode flow paths can be connected to the flow path P2 using, for example, a manifold-type pipe. The outlets of the plurality of the anode flow paths can be connected to the flow path P4 using, for example, a manifold-type pipe. These are not limiting, and the plurality of the anode flow paths may be connected to different flow paths P2 and different flow paths P4.

The plurality of cathode flow paths of the plurality of the electrochemical reaction cells EC are mutually connected in parallel. The inlets of the plurality of cathode flow paths can be connected to the flow path P1 using, for example, a manifold-type pipe. The outlets of the plurality of cathode flow paths can be connected to the flow path P3 using, for example, a manifold-type pipe. These are not limiting, and the plurality of cathode flow paths may be connected to different flow paths P1 and different flow paths P3.

In FIG. 12, the single gas-liquid separator 18 is provided to pass through intermediate points of the anode flow paths in the plurality of the electrochemical reaction cells EC and is capable of gas-liquid separation collectively for the plurality of the anode flow paths, but the gas-liquid separators 18 smaller in number than the number of the plurality of the electrochemical reaction cells EC may be provided at the intermediate points of the anode flow paths in the plurality of the electrochemical reaction cells EC. Further, providing the gas-liquid separator 18 in a casing of the cell stack enables the downsizing of the electrochemical reaction device 1. Providing the gas-liquid separator 18 further makes it possible to separate the oxygen-containing gas from the linear anode flow paths, and accordingly reduce a decline in electrolysis efficiency. Further, a decline in the cooling effect can be reduced.

### (Thirteenth Arrangement)

FIG. 13 is a schematic view illustrating an example configuration of an electrochemical reaction device of a thirteenth arrangement. As illustrated in FIG. 13, the electrochemical reaction device 1 has the stack composed of the plurality of stacked electrochemical reaction cells EC, and has gas-liquid separators 18 on the anode flow paths. The following will describe parts different from the electrochemical reaction device of the twelfth arrangement, and for the other parts, the description of the electrochemical reaction device of the twelfth arrangement can be referred to as required.

The gas-liquid separators 18 can be formed by gas-liquid separation membranes arranged above the anode chambers 150, for instance. Consequently, it is possible to form a layered structure of a liquid layer containing water or the electrolytic solution and a gas layer containing the oxygen-containing gas. The gas separated by the gas-liquid separation membranes is discharged to the outside through the flow path P10 connected to gas outlets of the gas-liquid separators 18. This eliminates the need for the electrochemical reaction device to have the flow path P8 and the flow path P9.

The gas outlets of the plurality of the gas-liquid separators 18 of the plurality of the electrochemical reaction cells EC are mutually connected in parallel. The gas outlets of the plurality of the gas-liquid separators 18 can be connected to the flow path P10 using, for example, a manifold-type pipe. The flow path P10 may pass through the flow path plate 15. The gas outlets of the gas-liquid separators 18 of the different electrochemical reaction cells EC do not necessarily have to be mutually connected.

This form is usable both in the single electrolytic chemical reaction cell and the cell stack, but in the case of the cell stack, fluid inlets to the gas-liquid separators 18 do not have to be provided at the intermediate points of the anode flow paths, and accordingly the electrochemical reaction device 1 can be downsized. Further, providing the gas-liquid separators 18 makes it possible to separate the oxygen-containing gas from the linear anode flow paths, thereby reducing a decline in electrolysis efficiency. Further, a decline in the cooling effect can be reduced.

### (Fourteenth Arrangement)

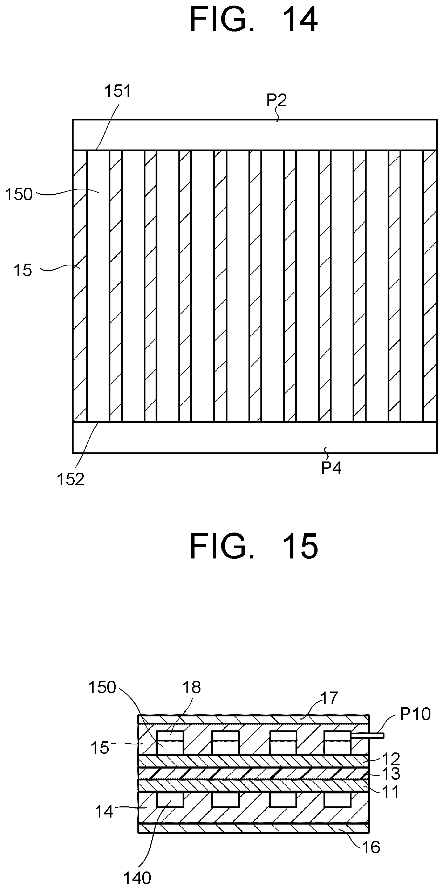

FIG. 14 and FIG. 15 are schematic views illustrating an example configuration of an electrochemical reaction device of a fourteenth arrangement. FIG. 14 illustrates an example planar structure of anode flow paths. FIG. 15 illustrates a sectional structure of the anode flow paths. As illustrated in FIG. 14 and FIG. 15, the electrochemical reaction device 1 has the plurality of the anode flow paths including a plurality of the anode chambers 150. The following will describe parts different from the electrochemical reaction device of the fourth arrangement, and for the other parts, the description of the electrochemical reaction device of the fourth arrangement can be referred to as required.

The plurality of the anode flow paths each have a stripe-shaped plane. The plurality of the anode flow paths each have an inlet (anode flow path inlet) 151 through which a fluid is supplied to the anode chamber 150 and an outlet (anode fluid outlet) 152 through which a fluid is discharged from the anode chamber 150.

The gas-liquid separators 18 can be formed by gas-liquid separation membranes arranged above the anode chambers 150. As illustrated in FIG. 15, the electrochemical reaction device may have the plurality of the gas-liquid separators 18 provided on the different anode chambers 150. In the case of the linear anode flow paths illustrated in FIG. 14, the gas-liquid separators 18 are preferably formed by the gas-liquid separation membranes arranged on the upper surfaces of the anode flow paths. The oxygen-containing gas separated by the gas-liquid separators 18 can be discharged through the flow path P10 connected to the gas outlets of the gas-liquid separators 18. Therefore, it is not necessary for the electrochemical reaction device to have the flow path P8 and the flow path P9. The flow path P10 may pass through the flow path plate 15.

Providing the plurality of linear anode flow paths makes it possible to, for example, shorten the flow path, and accordingly reduce the accumulation of the gas contained in the anode fluid. Further, providing the gas-liquid separators 18 makes it possible to separate the oxygen-containing gas from the linear anode flow paths, and accordingly reduce a decline in electrolysis efficiency. In addition, a reduction in cooling effect can be reduced.

As illustrated in FIG. 14 and the FIG. 15, the number of times the plurality of the anode flow paths turn back on the surface, of the flow path plate 15, where the anode chambers 150 are formed is preferably two or less. Setting it to two or less makes it possible to shorten the flow path, for instance, and accordingly reduce the accumulation of the gas contained in the anode fluid. On the surface, of the flow path plate 15, where the anode chambers 150 are formed, the plurality of the anode flow paths each may turn back between the flow path P2 and the inlet 151 and turn back once between the outlet 152 and the flow path P4.

### EXAMPLES

Electrochemical reaction devices of Examples 1 to 12 and Comparative Examples 1 and 2 were fabricated. Further, to evaluate durability and electrolysis efficiency characteristics, a cathode supply fluid containing carbon dioxide was supplied to each cathode flow path, an anode supply fluid containing an electrolytic solution was supplied to each anode flow path, and the electrochemical reaction devices were operated with a 700 mA/cm² current density under the following condition. A power source 20 controlled a voltage to pass a current with the current density of 700 mA/cm² across a cathode 11 and an anode 12, carbon monoxide was produced through the reduction of the carbon dioxide in the cathode 11, and oxygen was produced through the oxidation of water in the anode 12. Further, a cathode discharge fluid discharged from each of the cathode flow paths was collected, and through an analysis of the cathode discharge fluid, Faradaic efficiency in the carbon monoxide production was calculated.

According to a change in the Faradaic efficiency in the carbon monoxide production, the electrochemical reaction devices were evaluated as follows. If the time from the operation start up to an instant when the Faradaic efficiency in the carbon monoxide production reached 90% or less was shorter than 100 hours, the relevant electrochemical reaction device was evaluated as × (Cross mark: Bad), and if the aforesaid time was 100 hours or longer, the relevant electrochemical reaction device was evaluated as ∘ (Single circle mark: Good). Further, if the time from the operation start up to an instant when the Faradaic efficiency in the carbon monoxide production reached 95% or less was 100 hours or longer, the relevant electrochemical reaction device was evaluated as ⊚ (Double circle mark: Very Good).

### (Comparative Example 1)

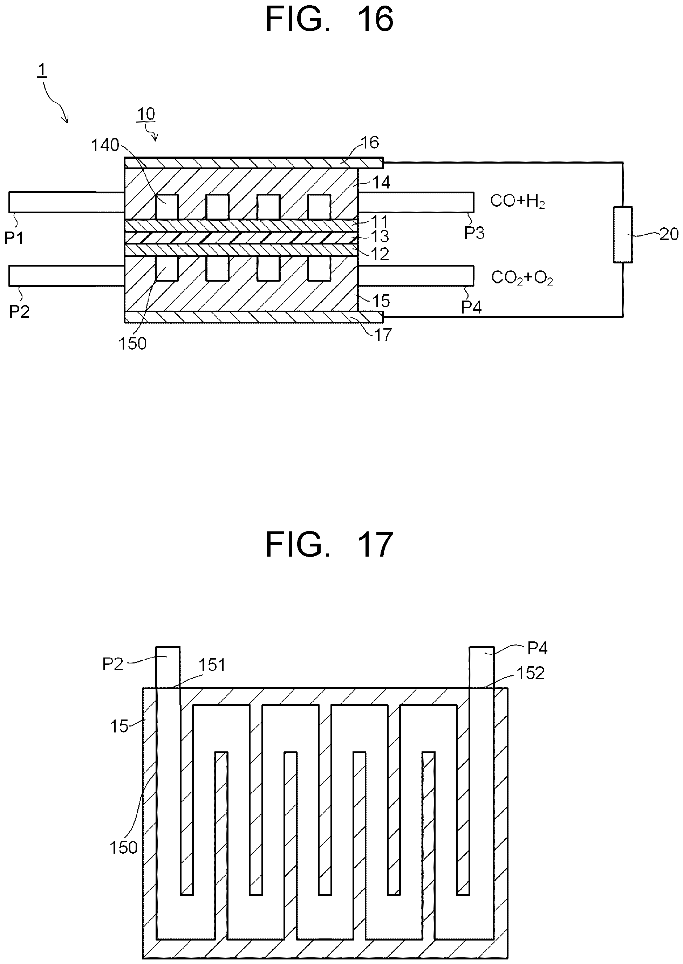

FIG. 16 and FIG. 17 are schematic views illustrating an example configuration of the electrochemical reaction device of Comparative Example 1. The electrochemical reaction device of Comparative Example 1 has the structure illustrated in FIG. 16, has the structures of an anode chamber 150, a flow path plate 15, and an anode flow path illustrated in FIG. 17, and has no gas-liquid separator 18. The electrochemical reaction device of Comparative Example 1 is different from the electrochemical reaction device illustrated in FIG. 1 in that it does not have the gas-liquid separator 18. The evaluation result of the electrochemical reaction device of Comparative Example 1 was × (Bad).

### (Example 1)

The electrochemical reaction device of Example 1 is different from the electrochemical reaction device of Comparative Example 1 in that it has the structure illustrated in FIG. 1 and has the structures of the anode chamber 150, the flow path plate 15, the anode flow path, and the gas-liquid separator 18 illustrated in FIG. 4. The evaluation result of the electrochemical reaction device of Example 1 was ∘ (Good). This shows that decreasing the concentration of the gas contained in the anode fluid makes it possible to reduce a decline in Faradaic efficiency in the carbon monoxide production.

### (Example 2)

The electrochemical reaction device of Example 2 is different from the electrochemical reaction device of Comparative Example 1 in that it has the structure illustrated in FIG. 1 and has the structures of the anode chamber 150, the flow path plate 15, the anode flow path, and the gas-liquid separator 18 illustrated in FIG. 5. The evaluation result of the electrochemical reaction device of Example 2 was ⊚ (Very Good). This shows that decreasing the concentration of the gas contained in the anode fluid makes it possible to reduce a decline in Faradaic efficiency in the carbon monoxide production.

### (Example 3)

The electrochemical reaction device of Example 3 is different from the electrochemical reaction device of Comparative Example 1 in that it has the structure illustrated in FIG. 1 and has the structures of the anode chamber 150, the flow path plate 15, the anode flow path, and the gas-liquid separator 18 illustrated in FIG. 6. The evaluation result of the electrochemical reaction device of Example 3 was ∘ (Good). This shows that decreasing the concentration of the gas contained in the anode fluid makes it possible to reduce a decline in Faradaic efficiency in the carbon monoxide production.

### (Example 4)

The electrochemical reaction device of Example 4 is different from the electrochemical reaction device of Comparative Example 1 in that it has the structure illustrated in FIG. 1 and has the structures of the anode chamber 150, the flow path plate 15, the anode flow path, and the gas-liquid separator 18 illustrated in FIG. 7. The evaluation result of the electrochemical reaction device of Example 4 was ⊚ (Very Good). This shows that decreasing the concentration of the gas contained in the anode fluid makes it possible to reduce a decline in Faradaic efficiency in the carbon monoxide production.

### (Example 5)

The electrochemical reaction device of Example 5 is different from the electrochemical reaction device of Comparative Example 1 in that it has the structure illustrated in FIG. 1, has the structures of the anode chamber 150, the flow path plate 15, the anode flow path, and the gas-liquid separator 18 illustrated in FIG. 8, and has the removing part 21 including the metal ion remover. The evaluation result of the electrochemical reaction device of Example 5 was ∘ (Good). Further, the concentration of metal ions in the electrolytic solution was half that in the electrochemical reaction device of Comparative Example 1. This shows that reducing the amount of the metal ions in the electrolytic solution makes it possible to reduce a decline in Faradaic efficiency in the carbon monoxide production.

### (Example 6)

The electrochemical reaction device of Example 6 is different from the electrochemical reaction device of Comparative Example 1 in that it has the structure illustrated in FIG. 1, has the structures of the anode chamber 150, the flow path plate 15, the anode flow path, and the gas-liquid separator 18 illustrated in FIG. 8, and has the removing part 21 including the radical remover. The evaluation result of the electrochemical reaction device of Example 6 was ⊚ (Very Good). Further, as compared with the electrochemical reaction device of Comparative Example 1, in the electrochemical reaction device of Example 6, owing to its radical remover, no deterioration of an electrolyte membrane and a gasket was confirmed. This shows that removing radicals makes it possible to reduce a decline in Faradaic efficiency in the carbon monoxide production.

### (Example 7)

The electrochemical reaction device of Example 7 is different from the electrochemical reaction device of Comparative Example 1 in that it has the structure illustrated in FIG. 1, has the structures of the anode chamber 150, the flow path plate 15, the anode flow path, and the gas-liquid separator 18 illustrated in FIG. 9, and has the detecting part 23 including the pH detector. The evaluation result of the electrochemical reaction device of Example 7 was ∘ (Good). In the electrochemical reaction device of Example 7, owing to its pH detector, the pH of the electrolytic solution could be adjusted to a proper value even if the pH of the electrolytic solution changed. This shows that adjusting the pH of the electrolytic solution makes it possible to reduce a decline in Faradaic efficiency in the carbon monoxide production.

### (Example 8)

The electrochemical reaction device of Example 8 is different from the electrochemical reaction device of Comparative Example 1 in that it has the structure illustrated in FIG. 1, has the structures of the anode chamber 150, the flow path plate 15, the anode flow path, and the gas-liquid separator 18 illustrated in FIG. 9, and has the detecting part 23 including the ion impurity detector. The evaluation result of the electrochemical reaction device of Example 8 was ∘ (Good). In the electrochemical reaction device of Example 8, owing to its ion impurity detector, it is possible to confirm an increase in the amount of ion impurities in the electrolytic solution.

### (Example 9)

The electrochemical reaction device of Example 9 is different from the electrochemical reaction device of Comparative Example 1 in that it has the structure illustrated in FIG. 1, has the structures of the anode chamber 150, the flow path plate 15, the anode flow path, and the gas-liquid separator 18 illustrated in FIG. 10, and has the detecting part 23, which includes the pH detector, and the pH adjusting part 25. The pH of the electrolytic solution was adjusted to 8.5 by the pH adjusting part 25. The evaluation result of the electrochemical reaction device of Example 9 was ⊚ (Very Good). This shows that adjusting the pH of the electrolytic solution makes it possible to reduce a decline in Faradaic efficiency in the carbon monoxide production.

### (Comparative Example 2)

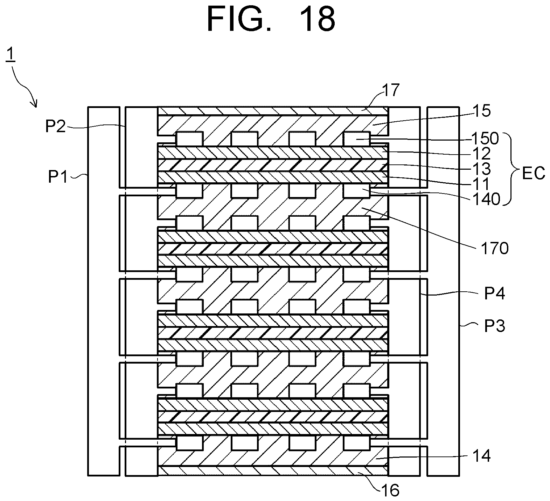

FIG. 18 is a schematic view illustrating an example configuration of the electrochemical reaction device of Comparative Example 2. The electrochemical reaction device of Comparative Example 2 is different from the electrochemical reaction device of Comparative Example 1 in that it has the structure illustrated in FIG. 18 and has the structures of the anode chamber 150, the flow path plate 15, and the anode flow path illustrated in FIG. 18. The evaluation result of the electrochemical reaction device of Comparative Example 2 was × (Bad).

### (Example 10)

The electrochemical reaction device of Example 10 is different from the electrochemical reaction device of Comparative Example 1 in that it has the structure illustrated in FIG. 12 and has the structures of the anode chamber 150, the flow path plate 15, the anode flow path, and the gas-liquid separator 18 illustrated in FIG. 4. The evaluation result of the electrochemical reaction device of Example 10 was ∘ (Good).

### (Example 11)

The electrochemical reaction device of Example 11 is different from the electrochemical reaction device of Comparative Example 1 in that it has the structure illustrated in FIG. 13 and has the structures of the anode chamber 150, the flow path plate 15, and the anode flow path illustrated in FIG. 4. The evaluation result of the electrochemical reaction device of Example 11 was ∘ (Good).

### (Example 12)

The electrochemical reaction device of Example 12 is different from the electrochemical reaction device of Comparative Example 1 in that it has the structure illustrated in FIG. 13 and has the structures of the anode chamber 150 and the flow path plate 15 illustrated in FIG. 14 and FIG. 15. The evaluation result of the electrochemical reaction device of Example 12 was ⊚ (Very Good).

It should be noted that the configurations of the above-described arrangements are applicable in combination. Further, they are partly replaceable. While certain arrangements of the present invention have been described here, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The above-described arrangements can be summarized into the following clauses.
(Clause 1) An electrochemical reaction device comprising:
   an electrochemical reaction structure comprising
      a cathode having a reduction catalyst that promotes a reduction reaction of reducing carbon dioxide to produce a carbon compound,
      an anode having an oxidation catalyst that promotes an oxidation reaction of oxidizing water to produce oxygen,
      a diaphragm provided between the cathode and the anode,
      a cathode flow path facing on the cathode, and
      an anode flow path facing on the anode;
   a first flow path through which a first fluid to be supplied to the cathode flow path flows, the first flow path being connected to an inlet of the cathode flow path, and the first fluid containing the carbon dioxide;
   a second flow path through which a second fluid to be supplied to the anode flow path flows, the second flow path being connected to an inlet of the anode flow path, and the second fluid containing the water;
   a third flow path through which a third fluid to be discharged from the cathode flow path flows, the third flow path being connected to an outlet of the cathode flow path, and the third fluid containing the carbon compound;
   a fourth flow path through which a fourth fluid to be discharged from the anode flow path flows, the fourth flow path being connected to an outlet of the anode flow path, and the fourth fluid containing the water and the oxygen; and
   a gas-liquid separator provided in the middle of the anode flow path or on the anode flow path, the gas-liquid separator being configured to process a fifth fluid that flows through the anode flow path and contains the water and the oxygen to separate a gas containing the oxygen from the fifth fluid.
(Clause 2) The electrochemical reaction device according to clause 1, further comprising:
   a second cathode flow path provided between the cathode and the diaphragm;
   a fifth flow path thorough which a sixth fluid to be supplied to the second cathode flow path flows, the fifth flow path being connected to an inlet of the second cathode flow path, and the sixth fluid containing an electrolytic solution; and
   a sixth flow path through which a seventh fluid to be discharged from the second cathode flow path flows, the sixth flow path being connected to an outlet of the second cathode flow path.
(Clause 3) The electrochemical reaction device according to clause 1, further comprising:
   a first current collector connected to the cathode; and
   a second current collector connected to the anode,
   wherein the first current collector and the second current collector are connected to a power source.
(Clause 4) The electrochemical reaction device according to clause 1, comprising
   a plurality of the gas-liquid separators.
(Clause 5) The electrochemical reaction device according to clause 1,
   wherein the gas-liquid separator is connected to the fourth flow path and is configured to process the fourth fluid from the fourth flow path to separate a gas containing the oxygen from the fourth fluid.
(Clause 6) The electrochemical reaction device according to clause 1, further comprising:
   a second gas-liquid separator configured to process the fourth fluid to separate a gas containing the oxygen from the fourth fluid; and
   a seventh flow path through which the processed fourth fluid to be supplied from the second gas-liquid separator to the second flow path flows.
(Clause 7) The electrochemical reaction device according to clause 1, comprising
   a plurality of the gas-liquid separators,
   wherein the electrochemical reaction structure comprises a plurality of the anode flow paths,
   wherein the plurality of the anode flow paths are connected in parallel,
   wherein one of the plurality of the gas-liquid separators is provided on one of the plurality of the anode flow paths, and
   wherein another one of the plurality of the gas-liquid separators is provided on another one of the plurality of the anode flow paths.
(Clause 8) The electrochemical reaction device according to any one of clause 1 to clause 7, further comprising
   a removing part provided in the gas-liquid separator and having at least one remover selected from the group consisting of an ion remover and a radical remover, the ion remover being configured to remove a metal ion from the fifth fluid, and the radical remover being configured to remove a hydroxyl radical from the fifth fluid.
(Clause 9) The electrochemical reaction device according to any one of clause 1 to clause 7, further comprising
   at least one detector selected from the group consisting of a pH detector and an ion impurity detector, the least one detector being connected to the gas-liquid separator, the pH detector being configured to detect a pH of the fifth fluid, and the ion impurity detector being configured to detect a concentration of an ion impurity in the fifth fluid.
(Clause 10) The electrochemical reaction device according to clause 9, further comprising
   a pH adjusting part connected to the gas-liquid separator and configured to adjust the pH of the fifth fluid.
(Clause 11) The electrochemical reaction device according to any one of clause 1 to clause 7, further comprising
   a recovery part provided in the gas-liquid separator and configured to recover the oxidation catalyst from the fifth fluid.
(Clause 12) The electrochemical reaction device according to clause 1, comprising
   a stack comprising a plurality of the electrochemical reaction structures, the plurality of the electrochemical reaction structures being stacked,
   wherein the gas-liquid separator is provided in the middle of each of a plurality of the anode flow paths of the plurality of the electrochemical reaction structures.
(Clause 13) The electrochemical reaction device according to clause 1, comprising:
   a stack comprising a plurality of the electrochemical reaction structures which are stacked; and
   a plurality of the gas-liquid separators,
   wherein a plurality of the anode flow paths of the plurality of the electrochemical reaction structures are connected in parallel,
   wherein one of the plurality of the gas-liquid separators is provided on one of the plurality of the anode flow paths, and
   wherein another one of the plurality of the gas-liquid separators is provided on another one of the plurality of the anode flow paths.
(Clause 14) The electrochemical reaction device according to clause 1,
   wherein the anode flow path includes:
   a first anode flow path part facing on the anode, the first anode flow path part being connected to the inlet of the anode flow path;
   a second anode flow path part facing on the anode, the second anode flow path part being connected to the outlet of the anode flow path;
   an eighth flow path through which the fifth fluid to be supplied from the first anode flow path part to the gas-liquid separator flows; and
   a ninth flow path through which the processed fifth fluid to be supplied from the gas-liquid separator to the second anode flow path part flows.
(Clause 15) A method of operating an electrochemical reaction device,
   the electrochemical reaction device comprising:
   an electrochemical reaction structure comprising
      a cathode having a reduction catalyst that promotes a reduction reaction of reducing carbon dioxide to produce a carbon compound,
      an anode having an oxidation catalyst that promotes an oxidation reaction of oxidizing water to produce oxygen,
      a diaphragm provided between the cathode and the anode,
      a cathode flow path facing on the cathode, and
      an anode flow path facing on the anode;
   a first flow path which through a first fluid to be supplied to the cathode flow path flows, the first flow path being connected to an inlet of the cathode flow path, and the first fluid containing the carbon dioxide;
   a second flow path through which a second fluid to be supplied to the anode flow path flows, the second flow path being connected to an inlet of the anode flow path, and the second fluid containing the water;
   a third flow path through which a third fluid to be discharged from the cathode flow path flows, the third flow path being connected to an outlet of the cathode flow path, and the third fluid containing the carbon compound; and
   a fourth flow path through which a fourth fluid to be discharged from the anode flow path flows, the fourth flow path being connected to an outlet of the anode flow path, and the fourth fluid containing the water and the oxygen, and
   the method comprising:
      supplying the first fluid to the cathode flow path, supplying the second fluid to the anode flow path, and supplying a current or a voltage to the electrochemical reaction structure, to reduce the carbon dioxide to produce the carbon compound on the cathode and to oxidize the water to produce the oxygen on the anode; and
      processing a fifth fluid flowing through the anode flow path and containing the water and the oxygen to separate a gas containing the oxygen from the fifth fluid.

## Claims

1. An electrochemical reaction device comprising:
an electrochemical reaction structure comprising
a cathode having a reduction catalyst that promotes a reduction reaction of reducing carbon dioxide to produce a carbon compound,
an anode having an oxidation catalyst that promotes an oxidation reaction of oxidizing water to produce oxygen,
a diaphragm provided between the cathode and the anode,
a cathode flow path facing on the cathode, and
an anode flow path facing on the anode;
a first flow path through which a first fluid to be supplied to the cathode flow path flows, the first flow path being connected to an inlet of the cathode flow path, and the first fluid containing the carbon dioxide;
a second flow path through which a second fluid to be supplied to the anode flow path flows, the second flow path being connected to an inlet of the anode flow path, and the second fluid containing the water;
a third flow path through which a third fluid to be discharged from the cathode flow path flows, the third flow path being connected to an outlet of the cathode flow path, and the third fluid containing the carbon compound;
a fourth flow path through which a fourth fluid to be discharged from the anode flow path flows, the fourth flow path being connected to an outlet of the anode flow path, and the fourth fluid containing the water and the oxygen; and
a gas-liquid separator provided in the middle of the anode flow path or on the anode flow path, the gas-liquid separator being configured to process a fifth fluid that flows through the anode flow path and contains the water and the oxygen to separate a gas containing the oxygen from the fifth fluid.

2. The electrochemical reaction device according to claim 1, further comprising:
a second cathode flow path provided between the cathode and the diaphragm;
a fifth flow path thorough which a sixth fluid to be supplied to the second cathode flow path flows, the fifth flow path being connected to an inlet of the second cathode flow path, and the sixth fluid containing an electrolytic solution; and
a sixth flow path through which a seventh fluid to be discharged from the second cathode flow path flows, the sixth flow path being connected to an outlet of the second cathode flow path.

3. The electrochemical reaction device according to claim 1, further comprising:
a first current collector connected to the cathode; and
a second current collector connected to the anode,
wherein the first current collector and the second current collector are connected to a power source.

4. The electrochemical reaction device according to claim 1, comprising a plurality of the gas-liquid separators.

5. The electrochemical reaction device according to claim 1,
wherein the gas-liquid separator is connected to the fourth flow path and is configured to process the fourth fluid from the fourth flow path to separate a gas containing the oxygen from the fourth fluid.

6. The electrochemical reaction device according to claim 1, further comprising:
a second gas-liquid separator configured to process the fourth fluid to separate a gas containing the oxygen from the fourth fluid; and
a seventh flow path through which the processed fourth fluid to be supplied from the second gas-liquid separator to the second flow path flows.

7. The electrochemical reaction device according to claim 1, comprising
a plurality of the gas-liquid separators,
wherein the electrochemical reaction structure comprises a plurality of the anode flow paths,
wherein the plurality of the anode flow paths are connected in parallel,
wherein one of the plurality of the gas-liquid separators is provided on one of the plurality of the anode flow paths, and
wherein another one of the plurality of the gas-liquid separators is provided on another one of the plurality of the anode flow paths.

8. The electrochemical reaction device according to any one of claim 1 to claim 7, further comprising
a removing part provided in the gas-liquid separator and having at least one remover selected from the group consisting of an ion remover and a radical remover, the ion remover being configured to remove a metal ion from the fifth fluid, and the radical remover being configured to remove a hydroxyl radical from the fifth fluid.

9. The electrochemical reaction device according to any one of claim 1 to claim 7, further comprising
at least one detector selected from the group consisting of a pH detector and an ion impurity detector, the least one detector being connected to the gas-liquid separator, the pH detector being configured to detect a pH of the fifth fluid, and the ion impurity detector being configured to detect a concentration of an ion impurity in the fifth fluid.

10. The electrochemical reaction device according to claim 9, further comprising
a pH adjusting part connected to the gas-liquid separator and configured to adjust the pH of the fifth fluid.

11. The electrochemical reaction device according to any one of claim 1 to claim 7, further comprising
a recovery part provided in the gas-liquid separator and configured to recover the oxidation catalyst from the fifth fluid.

12. The electrochemical reaction device according to claim 1, comprising
a stack comprising a plurality of the electrochemical reaction structures, the plurality of the electrochemical reaction structures being stacked,
wherein the gas-liquid separator is provided in the middle of each of a plurality of the anode flow paths of the plurality of the electrochemical reaction structures.

13. The electrochemical reaction device according to claim 1, comprising:
a stack comprising a plurality of the electrochemical reaction structures which are stacked; and
a plurality of the gas-liquid separators,
wherein a plurality of the anode flow paths of the plurality of the electrochemical reaction structures are connected in parallel,
wherein one of the plurality of the gas-liquid separators is provided on one of the plurality of the anode flow paths, and
wherein another one of the plurality of the gas-liquid separators is provided on another one of the plurality of the anode flow paths.

14. The electrochemical reaction device according to claim 1,
wherein the anode flow path includes:
a first anode flow path part facing on the anode, the first anode flow path part being connected to the inlet of the anode flow path;
a second anode flow path part facing on the anode, the second anode flow path part being connected to the outlet of the anode flow path;
an eighth flow path through which the fifth fluid to be supplied from the first anode flow path part to the gas-liquid separator flows; and
a ninth flow path through which the processed fifth fluid to be supplied from the gas-liquid separator to the second anode flow path part flows.

15. A method of operating an electrochemical reaction device,
the electrochemical reaction device comprising:
an electrochemical reaction structure comprising
a cathode having a reduction catalyst that promotes a reduction reaction of reducing carbon dioxide to produce a carbon compound,
an anode having an oxidation catalyst that promotes an oxidation reaction of oxidizing water to produce oxygen,
a diaphragm provided between the cathode and the anode,
a cathode flow path facing on the cathode, and
an anode flow path facing on the anode;
a first flow path which through a first fluid to be supplied to the cathode flow path flows, the first flow path being connected to an inlet of the cathode flow path, and the first fluid containing the carbon dioxide;
a second flow path through which a second fluid to be supplied to the anode flow path flows, the second flow path being connected to an inlet of the anode flow path, and the second fluid containing the water;
a third flow path through which a third fluid to be discharged from the cathode flow path flows, the third flow path being connected to an outlet of the cathode flow path, and the third fluid containing the carbon compound; and
a fourth flow path through which a fourth fluid to be discharged from the anode flow path flows, the fourth flow path being connected to an outlet of the anode flow path, and the fourth fluid containing the water and the oxygen, and
the method comprising:
supplying the first fluid to the cathode flow path, supplying the second fluid to the anode flow path, and supplying a current or a voltage to the electrochemical reaction structure, to reduce the carbon dioxide to produce the carbon compound on the cathode and to oxidize the water to produce the oxygen on the anode; and
processing a fifth fluid flowing through the anode flow path and containing the water and the oxygen to separate a gas containing the oxygen from the fifth fluid.
